# EUROPEAN PATENT APPLICATION

(11) **EP 1 609 661 A1**
(43) Date of publication of application: **28.12.2005**
(21) Application number: 04076848.3
(22) Date of filing: 24.06.2004
(51) Int. Cl.: B60L 11/18

(54) **DC power supply**

(71) Applicant: Nederlandse Organisatie voor Toegepast-Natuurwetenschappelijk Onderzoek TNO, 2628 VK Delft (NL)
(72) Inventor: Rondel, Marcel, 2625 PL Delft (NL)
(74) Representative: Winckels, Johannes Hubertus F.

(57) **Abstract**

Power supply (6) for E/M conversion means (1), fit to convert electric energy, in the form of direct current (DC), into mechanical energy electric and fit to convert back mechanical energy into DC electrical energy. The power supply comprises a main DC supply buffer (7), fit to buffer a large amount of electric energy, control means (9) fit to enable that electric energy is transmitted from the main DC supply buffer to the E/M conversion means and to disable that electric energy is transmitted back from the E/M conversion means to the main buffer. The power supply, moreover, comprises an additional DC buffer (8), fit to supply electric energy to the E/M conversion means and to absorb electric energy transmitted back from the E/M conversion means to the additional DC buffer. A vehicle, using the power supply may comprise a DC or AC based machine having recuperation or re-generation capabilities.

## Description

### FIELD OF THE INVENTION

The invention relates to a power supply for E/M conversion means (e.g. electric machine) fit to convert electric energy, having the form of direct current (DC), into mechanical energy electric and, additionally, fit to convert back mechanical energy into DC electrical energy. Such E/M conversion means may be used to drive vehicles or other objects like fork-lift trucks, tractors, trucks, cars, scooters etc. or linear transport systems.

### BACKGROUND OF THE INVENTION

Modem electric vehicles may be driven by recuperative E/M conversion means e.g. comprising one or more electric, DC or AC based machines (motor/generator). When such vehicles are powered by (DC) batteries, DC/DC or AC/DC conversion or control means will be used. The property of an AC machine to operate as a motor as well as a generator may be used to recuperate or re-generate energy, viz. by converting -during brake or inversion of the vehicle's drive direction- the vehicle's mechanical energy into AC electrical energy which is converted -by AC/DC conversion means- into DC by the AC/DC conversion means and fed back to the DC power supply. Instead of an AC machine and AC/DC conversion means, the E/M conversion means may comprise a DC motor with re-generation capabilities, e.g. in combination with DC/DC conversion or control means. The relevant AC or DC based machine may have the form of a rotating machine or the form of a linear machine, e.g. fit to drive linear vehicles or other objects.

A problem arises when the relevant work duty comprises many, rather dynamic "go-stop" or "start-stop" actions, which e.g. are normal for fork-lift trucks etc. Due to the recuperative behaviour of the driving means, those frequent "go-stop" actions will result in a dynamic, frequent "unload-load" duty of the DC power supply. Although at this moment relevant statistics are lacking, it is foreseen that, if normal (e.g. lead-acid) traction batteries are used, such frequent unload-load duties will shorten the expected life span of the batteries dramatically.

### SUMMARY OF THE INVENTION

The present invention aims to meet the drawback of the conventional DC power supply when used in a dynamic recuperative environment. To that end the power supply proposed here comprises:
- a main DC supply buffer, fit to buffer a large amount of electric energy (but not or less fit for dynamic unload-load duties),
- control means fit to enable that electric energy is transmitted from the main DC supply buffer to the E/M conversion means and to disable that electric energy is transmitted back from the E/M conversion means to the main buffer, and
- an additional DC buffer, fit for dynamically absorbing electric energy transmitted back (recuperated, re-generated) from the E/M conversion means, and for supplying (resorbing) electric energy to the E/M conversion means.
   The main DC supply buffer may comprise a (standard, e.g. lead-acid) traction battery, the control means, in the most simple form, may comprise a (power) diode, connecting the main DC power supply with the E/M conversion means and protecting the traction battery by blocking the electric energy, recuperated (fed back) by the E/M conversion means (the "machine") during vehicle brake actions etc.. During such brake actions the recuperated electrical energy will be absorbed only by the additional, dynamic DC buffer which has better characteristics for it. The characteristics of a power capacitor (known as "supercapacitor" or "ultracapacitor") appear to be very fit for the function of additional, dynamic DC buffer.
   Referring to the embodiment of the E/M conversion means, various options are possible. E.g. a brushless DC motor may be used, which is -according to www.s-line.de/homepages/bosch/sensorless/node9.html- the combination of a permanent excited synchronous motor and a pulse width modulation (PWM) frequency inverter. The inverter replaces the commutator of a conventional DC motor. Speed can be controlled by the the motor voltage. The motor behaves like a DC motor. The power for brushless motors generally is a trapezoidal AC wave form, but some of the motors operate with sine waves. Suitable PWM techniques allow regenerative (or recuperative) braking, which increases dynamic and efficiency of the drive. In fact, during regenerative/recuperative braking the motor is used as a generator, converting back mechanical energy into electrical energy. Another embodiment of the E/M conversion means may comprise the use of an (e.g. asynchronous) AC motor/generator which is connected to AC/DC conversion means, fit to convert DC into AC (at motor duty) and AC into DC (at generator duty during braking). The DC side of the AC/DC conversion means are connected to the DC power supply. Besides asynchronous and synchronous AC machines, also (AC based) switched reluctance machines may be used. And besides brushless DC machines, also modem DC machines with brushes may be used.
   So, in a preferred embodiment the power supply for an AC based or DC based electric machine (motor with re-generation capabilities) may comprise
- a main DC supply buffer, comprising a traction battery,
- control means, comprising a simple (power) diode, enabling that electric energy is transmitted from the traction battery to the electric machine and preventing that (recuperated) electric energy is transmitted back from the electric machine to the battery, causing a too rapid degradation or detoriation, and
- an additional DC buffer, comprising a high duty capacitor (power capacitor, supercapacitor, ultracapacitor) fit to absorb recuperated electric energy re-generated by the electric machine during brake actions and fit to supply (resorb) the absorbed electric energy back to the electric machine during start/drive operation of the vehicle.

The power supply as presented above may be part of the drive system of vehicles like e.g. fork-lift trucks, tractors, trucks, cars, scooters etc. or part of a linear drive system, e.g. using linear, recuperative electric (AC or DC based) machines.

### FIGURES

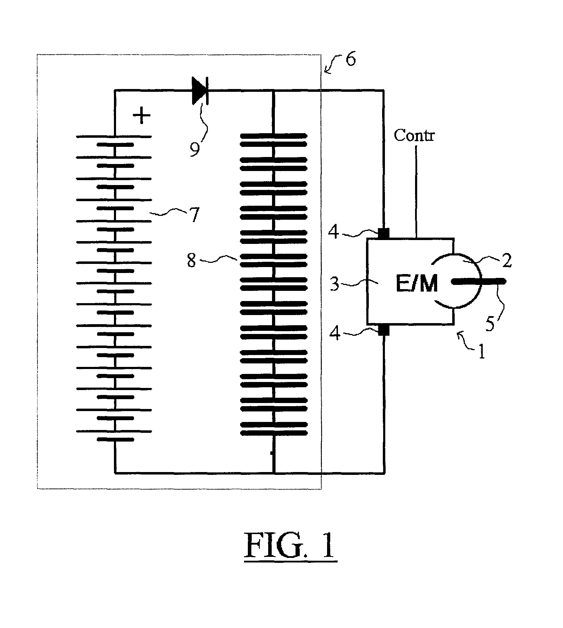

Figure 1 shows schematically the circuitry of a preferred embodiment of the power supply means as presented above, inclusive the E/M conversion or (recuperative) driving means. Shown is an E/M convertor 1 which is fit to convert DC, supplied to its clamps 4, into mechanical energy, to be supplied from its drive shaft 5. The E/M convertor comprises an AC or DC based electric machine (motor/generator) 1 and its control and/or conversion circuitry 3, which circuitry 3 makes the machine 2 capable to be fed by DC, supplied to its clamps 4, resulting in a rotating drive force at the shaft 5, as well as to supply back (re-generate) DC to the clamps 4 when -e.g. during brake- mechanical rotation energy is applied to the drive shaft 5. The control circuitry 3 is also fit for start-stop and speed control by e.g. the driver of the vehicle (not shown).

The DC power supply is formed by a traction battery 7, a supercapacitor 8 and a diode 9. The diode 9 enables DC power supply from the battery 7 to the E/M convertor 1 but blocks any DC power flowing back. The supercapacitor 8 is connected directly with the E/M convertor's clamps 4 and is fit to absorb DC current supplied by the battery 7 as well as supplied (during brake) by the E/M convertor 1. Moreover, the capacitor 8 is able to supply DC current to the E/M convertor 1.

Under "normal", static drive conditions the E/M convertor 1, driving e.g. a vehicle, is electrically fed from the traction battery 7, having a sufficient energy content to feed the E/M converter 1 for longer time.

When the vehicle brakes, part of the brake action may be performed by driving, by the vehicle's mass, the motor shaft 5. By such a (recuperative) brake action the E/M convertor 1 will act as an electric energy source -instead of energy drain when starting or staticly driven- supplying DC to its clamps 4. This thus re-generated DC energy will be absorbed by the supercapacitor 8 but not -due to the DC blocking capabilities of the diode 9- by the battery 7. In this way the battery 7 is protected against undesired dynamic unload-load duties.

When the vehicle starts again -controlled via the circuitry 3- both the battery 7 and the capacitor 8 will supply the needed DC current to the E/M convertor's clamps 4. After the energy content of the capacitor 8 will be exhausted in a rather short time, the E/M convertor 1 will remain to be fed by the battery 7 only. It is noted that during brake the voltage over the clamps 4 will become higher than the battery voltage. At restart, at first instance the supercapacitor 8 will unload -supplying its DC power to the E/M convertor 1- untill its voltage equals the battery voltage.

Although the energy content of the supercapacitor 8 is restricted compared with the energy content of the battery 7, the energy efficiency of the system is improved by temporarily absorbing the brake energy and resorbing the same during vehicle (re)start. An additional advantage is that the battery 7 will not or less be charged with the start current which normally is greater than the static drive current.

For completeness, it is noted that -as illustrated in figure 1- a power capacitor or supercapacitor may comprise a number of capacitor cells, in the same way as e.g. a traction battery may comprise a number of accumulator cells.

## Claims

1. Power supply (6) for E/M conversion means (1), fit to convert electric energy, in the form of direct current (DC), into mechanical energy electric and fit to convert back mechanical energy into DC electrical energy, the power supply comprising a main DC supply buffer (7), fit to buffer a large amount of electric energy, control means (9) fit to enable that electric energy is transmitted from the main DC supply buffer to the E/M conversion means and to disable that electric energy is transmitted back from the E/M conversion means to the main buffer, the power supply, moreover, comprising an additional DC buffer (8), fit to supply electric energy to the E/M conversion means and to absorb electric energy transmitted back from the E/M conversion means to the additional DC buffer.

2. Power supply according to claim 1, the main DC supply buffer comprising a traction battery (7).

3. Power supply according to claim 1, the control means comprising a diode (9).

4. Power supply according to claim 1, the additional DC buffer comprising a power capacitor (8).

5. Vehicle, comprising a power supply according to any claim 1 - 4.

6. Vehicle according to claim 5, the E/M conversion means comprising a DC based machine having recuperation or re-generation capabilities.

7. Vehicle according to claim 5, the E/M conversion means comprising an AC based machine having recuperation or re-generation capabilities.
